# DEMANDE DE BREVET EUROPEEN

(11) **EP 2 393 022 A2**
(43) Date de publication de la demande: **07.12.2011**
(21) Numéro de dépôt: 11161347.7
(22) Date de dépôt: 06.04.2011
(51) Int. Cl.: G06F 17/30

(54) **Procédé de création d'une séquence média par groupes cohérents de fichiers médias**

(30) Priorité: 14.04.2010 FR 1052852
(71) Demandeur: Orange Vallee, 92320 Chatillon (FR)
(72) Inventeur: Oulés, Guillaume, 75017, PARIS (FR)
(74) Mandataire: Le Tourneau, Augustin

(57) **Abrégé**

La présente invention concerne un procédé de création d'une séquence média, par exemple vidéo ou sonore, (130, 140), et un dispositif associé. Elle peut notamment concerner le montage vidéo automatisé, tel que mis en oeuvre sur des serveurs Web.

Le procédé comprend les étapes consistant à :
- obtenir (E702) une sélection de fichiers médias (122, Mⱼ);
- regrouper (E704) les fichiers médias sélectionnés en une pluralité de groupes (Gᵢ) selon au moins un critère de cohérence;
- sélectionner (E712), pour chaque groupe (Gᵢ) de fichiers médias ainsi construit, un motif média (126) parmi une pluralité de motifs médias prédéfinis, ledit motif média sélectionné étant apte à définir un rendu média pour l'ensemble des fichiers médias dudit groupe;
- assembler (E714, E716) les motifs média ainsi sélectionnés et leurs fichiers médias associés de sorte à former au moins une définition (130) de la séquence média (140).

## Description

La présente invention concerne un procédé de création d'une séquence média, et un dispositif associé.

Elle concerne plus précisément le montage média automatisé, tel qu'il peut notamment être mis en oeuvre sur des serveurs Web. La notion de "média" se rapporte ici aux différentes formes que peuvent prendre les contenus numériques, à savoir principalement des contenus vidéos, sonores ou multimédias (visuels et sonores).

Plusieurs sites Internet, tels que Stupeflix et Animoto (noms commerciaux), offrent un tel service pour la génération de films montés. Ce service vise notamment à réaliser, en un minimum d'interactions pour l'utilisateur, un film de souvenirs qui soit différent à chaque fois, même si l'ensemble des souvenirs utilisés reste le même.

De façon générale, les souvenirs utilisés sont des fichiers médias tels que des vidéos, des images, des fichiers sons ou encore des fichiers de texte. Bien entendu, toute donnée susceptible d'être convertie et intégrée dans une séquence vidéo pourra être prise en compte dans le cadre de la création de séquences vidéo.

La solution développée par Animoto, et décrite dans la publication WO 2008/109233 ou US 2008/0215979, permet de générer des mini-clips vidéo rythmés sur une musique choisie dans un catalogue.

Elle prévoit qu'un utilisateur charge un ensemble de fichiers médias visuels qui vont constituer ses souvenirs à monter, et indique un fichier audio à partir duquel le montage est réalisé. Le montage consiste alors à sélectionner automatiquement des motifs vidéo correspondant à un rendu visuel pour un ou plusieurs fichiers médias, puis à affecter les fichiers médias visuels à ces motifs vidéo.

En détail, plusieurs groupes de fichiers médias peuvent être formés, soit par choix de l'utilisateur, soit par analyse d'images. La sélection des motifs vidéo est alors réalisée, groupe après groupe, par parcours successifs d'un arbre binaire des motifs. Cet arbre binaire est basé sur l'orientation "portrait", notée P, ou "paysage", notée L, des fichiers médias, et mémorise, au niveau de ses noeuds, différents motifs disponibles.

Pour un groupe ou pour les fichiers médias restant à traiter qui suivent par exemple la configuration d'orientation suivante LPLLPLLLLPPPLPLLPL, tous les motifs disponibles aux noeuds correspondants, dans l'exemple les noeuds L, LP, LPL, LPLL, ..., sont pris en compte pour déterminer, après calculs de pondération et calculs aléatoires, un meilleur motif vidéo.

Un alignement de ces groupes sur une décomposition du fichier audio selon son rythme permet, par ailleurs, d'obtenir une synchronisation entre le rendu visuel et le rendu audio du film ainsi monté.

Pour l'utilisateur, le principal défaut relève de la lenteur générale de cette solution pour générer un film monté. Cette lenteur peut notamment provenir des nombreux traitements nécessaires, comme par exemple le parcours dans l'arbre binaire, le grand nombre de motifs vidéo alors obtenus à partir desquels les calculs de pondération et calculs aléatoires sont menés.

Par ailleurs, il a pu être constaté que le rendu du film monté n'est pas satisfaisant pour l'utilisateur. En effet, la cohérence de rendu visuel entre les fichiers médias affichés n'est pas optimale, alors même que l'utilisateur a pu la spécifier manuellement ou qu'elle a pu être déterminée par analyse, au travers des regroupements de fichiers médias.

Dans ce dessein, l'invention vise à résoudre au moins un des inconvénients des techniques de l'état de l'art en proposant notamment un procédé de création d'une séquence média à partir de fichiers médias, comprenant les étapes consistant à :
- obtenir une sélection de fichiers médias;
- regrouper les fichiers médias sélectionnés en une pluralité de groupes selon au moins un critère de cohérence;
   caractérisé en ce qu'il comprend en outre les étapes consistant à :
- sélectionner, pour chaque groupe de fichiers médias ainsi construit, un motif média parmi une pluralité de motifs médias prédéfinis qui définissent chacun un modèle de rendu média comprenant une pluralité d'emplacements fictifs pour y indiquer des fichiers médias en vue d'un rendu média de ces fichiers médias conforme audit modèle, ledit motif média sélectionné étant apte à définir un rendu média pour l'ensemble des fichiers médias dudit groupe;
- assembler les motifs médias ainsi sélectionnés et leurs fichiers médias associés de sorte à former au moins une définition de la séquence média.

Les motifs média, par exemple motifs vidéo ou motifs sonores, sont des modèles ou *patterns* qui définissent, à l'aide d'effets visuels et/ou sonores, un rendu visuel/sonore pour des fichiers médias à préciser.

La définition formée selon l'invention peut notamment être une représentation de la structure de la séquence média, par exemple sous forme de fichier. Cette définition peut alors être utilisée par un moteur de génération de séquence média pour générer concrètement la séquence correspondant à cette définition.

Bien entendu, la séquence média peut être directement générée par l'assemblage des motifs média et de leurs fichiers médias associés, ladite définition étant alors inhérente à la séquence générée.

Le procédé selon l'invention offre ainsi une cohérence de rendu média (visuel ou sonore par exemple) qui est accrue pour les fichiers médias à l'intérieur de la séquence vidéo. De façon similaire à la solution Animoto, un début de cohérence média est obtenu par le regroupement des fichiers médias, par exemple selon au moins une donnée associée auxdits fichiers médias.

La cohérence accrue de rendu média selon l'invention est en outre obtenue par le fait que l'on sélectionne un seul motif média pour un groupe ainsi défini. En effet, les inventeurs ont notamment constaté que la destruction de cohérence visuelle dans Animoto semble résulter de l'utilisation possible de n'importe quel motif disponible aux divers noeuds parcourus dans l'arbre binaire mentionné ci-avant.

Ainsi, contrairement à la solution Animoto, l'invention garantit que la cohérence média prévue par le concepteur à l'intérieur de chaque motif média est conservée pour l'ensemble d'un groupe de fichiers médias.

Dans un mode de réalisation, l'étape de sélection d'un motif média comprend une étape de détermination d'un sous-ensemble de motifs médias qui définissent, chacun, un rendu média pour un nombre de fichiers médias qui est compatible avec le nombre de fichiers médias constituant ledit groupe correspondant, ledit motif média sélectionné étant alors sélectionné à l'intérieur dudit sous-ensemble déterminé. Cette disposition consiste donc à vérifier que les motifs médias retenus permettent d'offrir un rendu média pour l'ensemble des fichiers médias du groupe considéré, les autres motifs ne pouvant assurer ce rendu média pour l'ensemble du groupe et donc la cohérence média obtenue par la mise en oeuvre de l'invention. En sélectionnant uniquement ces motifs médias, on réduit notamment le volume des motifs traités lors de la sélection effective du motif pour obtenir le rendu des fichiers médias du groupe. Ainsi, la charge de calculs pour cette sélection est réduite.

En particulier, le nombre de fichiers médias, ou taille d'un motif, dont un motif média peut définir conjointement le rendu média est variable sur une plage de valeurs par répétition d'au moins un composant élémentaire constitutif du motif média, et ladite étape de détermination consiste à déterminer les motifs médias dont la plage de valeurs associée inclut le nombre de fichiers médias dudit groupe.

L'utilisation de motifs médias de taille variable selon cette disposition permet de définir le rendu média (visuel et/ou sonore) de groupes pour plusieurs tailles de ceux-ci (nombre de fichiers médias les composant). On peut ainsi utiliser un plus faible nombre de motifs médias pour décrire les groupes de fichiers médias, ce qui réduit l'espace mémoire requis pour leur stockage et les calculs à opérer sur ceux-ci.

En outre, la compatibilité introduite ci-dessus entre la taille des motifs médias et la taille des groupes de fichiers médias est telle que ne sont conservés que les motifs médias qui peuvent offrir un rendu visuel pour l'intégralité du groupe de fichiers médias.

Selon une caractéristique particulière de l'invention, la sélection du motif média à l'intérieur dudit sous-ensemble déterminé est fonction d'une valeur aléatoire, par exemple par détermination aléatoire selon une distribution de probabilités sur les motifs médias dudit sous-ensemble. Cette caractéristique permet notamment d'offrir un nouveau film monté cohérent en terme de rendu média (visuel ou sonore) à chaque demande de l'utilisateur, même si un jeu identique de fichiers médias est utilisé pour la nouvelle demande de film. En outre, la détermination peut être fonction d'une pondération associée à chaque motif média dudit sous-ensemble. Dans ce cas, ladite distribution de probabilités évoquées ci-dessus tient compte de cette pondération. Cela permet de favoriser certains motifs médias.

Selon une caractéristique de l'invention, l'étape de regroupement comprend les étapes consistant à parcourir les fichiers médias dans un ordre chronologique et à regrouper les fichiers médias selon deux critères temporels combinés: une distance temporelle par rapport au fichier média le plus ancien dans le groupe et une distance temporelle par rapport au dernier fichier média inséré dans le groupe. On entend par "distance temporelle" l'intervalle de temps séparant deux fichiers médias, par exemple eu égard à des informations de datation propres à ceux-ci. Le "dernier fichier média" est par conséquent le plus récent, du fait du parcours dans l'ordre chronologique. Cette configuration assure une forte cohérence dans le rendu de la séquence média créée par l'invention, sur la base d'une "cohérence temporelle".

En effet, la "proximité temporelle" entre des fichiers médias s'accompagne généralement d'une forte cohérence entre eux. L'invention prévoit ici de combiner deux critères temporels afin d'optimiser un regroupement par cohérence temporelle en tenant compte d'une "enveloppe temporelle globale" à l'intérieur de laquelle sont compris tous les fichiers médias regroupés (par exemple 24 heures), et en tenant compte d'éventuelles pauses importantes dans cette enveloppe symbolisant une rupture de cohérence (par exemple plus de 30 minutes écoulées depuis le dernier fichier média). Bien entendu, ces critères peuvent être ajustés par l'utilisateur selon le cas d'espèce, ou être modifiés par apprentissage pour refléter par exemple des pauses longues relativement aux autres fichiers médias groupés ou une enveloppe temporelle en proportion de la plage temporelle couverte par l'ensemble des fichiers médias.

En particulier, le regroupement des fichiers médias est réalisé en tenant compte d'un critère de similitude entre des données de description associées aux fichiers médias du groupe, pris deux à deux. Cette disposition permet d'introduire une cohérence sémantique (utilisation de mots clés) et/ou géographique (utilisation de données de géolocalisation) en plus de la "cohérence temporelle" évoquée ci-dessus. La séquence média ainsi créée offre alors un rendu d'autant plus cohérent que l'invention permet ici de détecter d'éventuels fichiers médias contemporains mais de sujets très distincts, par exemple parce qu'ils concernent deux événements simultanés en des lieux distincts.

Selon une caractéristique particulière, l'étape de regroupement comprend une étape de formation de groupes de fichiers médias selon ledit au moins un critère de cohérence et une étape de fusion de groupes adjacents ainsi formés qui comprennent chacun moins de fichiers médias qu'une valeur seuil de fusion prédéfinie. On peut par exemple prendre le cas d'une valeur seuil égale à 2, ce qui revient à fusionner des singletons adjacents (groupes composés d'un seul fichier média).

Par cette disposition, on tend à réduire les traitements à effectuer pour procéder à la sélection des motifs médias, puisque les médias des groupes adjacents fusionnés sont traités ensemble.

De façon avantageuse, cette réduction des traitements s'accompagne d'un maintien de la cohérence de rendu média pour la séquence créée (c'est-à-dire l'impression globale qui ressort de cette séquence pour un utilisateur), bien que les fichiers médias d'origine et finalement fusionnés sont peu ou faiblement cohérents à la base (car les groupes correspondants sont de très petite taille).

Par ailleurs, on peut également prévoir que l'étape de regroupement comprend une étape de formation de groupes de fichiers médias selon ledit au moins un critère de cohérence et une étape de subdivision d'un groupe ainsi formé en fonction du nombre de fichiers médias qui constituent ledit groupe et d'une valeur seuil de subdivision prédéfinie, de sorte à obtenir une pluralité de groupes subdivisés constitués d'un nombre de fichiers médias inférieur à ladite valeur seuil de subdivision prédéfinie, avec par exemple une valeur seuil de subdivision égale à 10. Bien entendu, les opérations de subdivision peuvent être menées de façon récursive.

Cette disposition permet de réduire le nombre de motifs médias qui sont susceptibles d'être utilisés pour former la séquence finale. Cela résulte alors en une simplification de l'établissement de ceux-ci, en une réduction de l'espace mémoire utilisé et en une diminution des calculs à opérer sur chacun de ces motifs (sélection de motifs vidéo/sonores compatibles, puis sélection effective du motif retenu pour le rendu média).

De plus, on garantit une certaine uniformité des durées des effets (multi)médias (correspondant aux motifs médias sélectionnés) enchaînés dans la séquence, car la longueur des motifs médias utilisés est désormais bornée par cette valeur seuil de subdivision.

Dans un mode de réalisation de l'invention, un motif média comprend au moins un composant élémentaire destiné à recevoir l'identification d'un fichier média pour définir le rendu média de ce fichier média, et le procédé comprend une étape d'ajustement du motif média sélectionné par répétition dudit au moins un composant élémentaire de sorte à obtenir un motif média ajusté ayant un composant élémentaire pour chaque fichier média dudit groupe correspondant.

Cette disposition traduit la possibilité de répéter un même composant élémentaire au sein du motif afin de l'adapter pour décrire l'ensemble des fichiers médias du groupe à traiter. Les avantages de réduction du nombre de motifs médias pour décrire tous les groupes, et donc de l'espace mémoire requis et des calculs à opérer (comme évoqués précédemment) se retrouvent également ici.

Dans un autre mode de réalisation de l'invention, un motif média est constitué d'une séquence temporelle initiale de composants élémentaires destinés à recevoir chacun l'identification d'un fichier média, suivie d'une pile d'au moins deux séquences temporelles intermédiaires de composants élémentaires, suivie elle-même d'une séquence temporelle finale de composants élémentaires. Une pile de plusieurs séquences peut notamment correspondre à des séquences positionnées selon plusieurs plans superposés dans la séquence créée, par exemple un premier plan et un arrière plan. En variante, ces séquences de la pile peuvent correspondre à divers emplacements spatiaux dans des images de la séquence vidéo.

Cette configuration de la séquence vidéo en deux séquences temporelles entrecoupées d'une pile de séquences reflète une composition cohérente pour la présentation de fichiers médias: une introduction et une conclusion simples, entrecoupées de montages plus complexes.

Selon une caractéristique de l'invention, le procédé est mis en oeuvre à l'aide d'une programmation orientée objet munie de classes d'objets définissant les motifs médias prédéfinis et les composants élémentaires qui les composent. Cette disposition reflète l'utilisation de la programmation orientée objet par la présente invention. Cette programmation présente notamment l'avantage d'offrir des performances d'exécution très efficaces sur les systèmes informatiques actuels, assurant de la sorte une création rapide d'un film vidéo par exemple.

Notamment, cette disposition offre une correspondance simple entre les objets manipulés et les éléments généralement pris en compte par les serveurs de génération de séquence vidéo à partir d'un fichier (par exemple XML) de définition de la séquence, tel Stupeflix. Cette correspondance simple permet alors de générer rapidement et sans coût le fichier de définition, une fois la séquence média définie à l'aide des objets.

En particulier, l'assemblage des motifs médias comprend, pour chaque groupe de fichiers médias, la construction d'une portion de la séquence média correspondant audit groupe par duplication des objets composant le motif média sélectionné pour ledit groupe et par indication, dans ces objets, des identifications des fichiers médias dudit groupe, et comprend la conversion des objets associés à chaque portion en un fichier structuré de définition de la séquence média.

En outre, ladite conversion des objets comprend l'appel d'une méthode de sérialisation des objets en un langage informatique de balisage, type XML. De par sa large diffusion, le langage XML permet une interprétation simple au niveau de n'importe quel système informatique. Cette disposition permet en outre de s'intégrer directement dans des systèmes de génération de films montés à partir de fichiers de définition et des fichiers médias associés, comme par exemple un serveur Stupeflix.

Corrélativement, l'invention concerne un dispositif de création d'une séquence média à partir de fichiers médias, comprenant :
- un moyen d'obtention d'une sélection de fichiers médias;
- un module de regroupement des fichiers médias sélectionnés en une pluralité de groupes selon au moins un critère de cohérence;
   caractérisé en ce qu'il comprend en outre :
- un moyen de sélection pour sélectionner, pour chaque groupe de fichiers médias ainsi construit, un motif média parmi une pluralité de motifs médias prédéfinis qui définissent chacun un modèle de rendu média comprenant une pluralité d'emplacements fictifs pour y indiquer des fichiers médias en vue d'un rendu média de ces fichiers médias conforme audit modèle, ledit motif média sélectionné étant apte à définir un rendu média pour l'ensemble des fichiers médias dudit groupe;
- un moyen pour assembler les motifs médias ainsi sélectionnés et leurs fichiers médias associés de sorte à former au moins une définition de la séquence média.

Le dispositif de création présente des avantages similaires à ceux du procédé exposé ci-dessus, notamment d'offrir une cohérence accrue des films vidéo ainsi montés.

De façon optionnelle, le dispositif peut comprendre des moyens se rapportant aux caractéristiques du procédé exposé précédemment, et en particulier, des objets informatiques pour instancier des classes définissant les motifs médias prédéfinis et des composants élémentaires les composant.

L'invention concerne également un programme d'ordinateur lisible par un microprocesseur, comprenant des portions de code logiciel adaptées à mettre en oeuvre un procédé conforme à l'invention, lorsqu'il est chargé et exécuté par le microprocesseur.

Le programme d'ordinateur présente des caractéristiques et avantages analogues au procédé qu'il met en oeuvre.

D'autres particularités et avantages de l'invention apparaîtront encore dans la description ci-après, illustrée par les dessins ci-joints, dans lesquels :
- la **figure 1** représente un exemple de système pour la mise en oeuvre de l'invention;
- la **figure 2** montre une configuration matérielle particulière d'un dispositif apte à une mise en oeuvre du procédé selon l'invention;
- la **figure 3** illustre un exemple de base de données de fichiers médias utilisée par la présente invention;
- la **figure 4** illustre une bibliothèque de motifs vidéo pour l'invention;
- la **figure 5** représente un exemple de fragment XML correspondant à la définition d'un motif vidéo;
- la **figure 6** illustre schématiquement plusieurs classes d'une programmation orientée objet pour représenter les motifs vidéo;
- la **figure 7** représente, sous forme d'ordinogramme, des étapes d'un procédé selon l'invention;
- la **figure 8** illustre schématiquement des classes d'une programmation orientée objet pour représenter les fichiers médias;
- la **figure 9** illustre schématiquement plusieurs classes d'une programmation orientée objet pour représenter un film vidéo en construction; et
- la **figure 10** illustre un exemple de structure de motif vidéo.

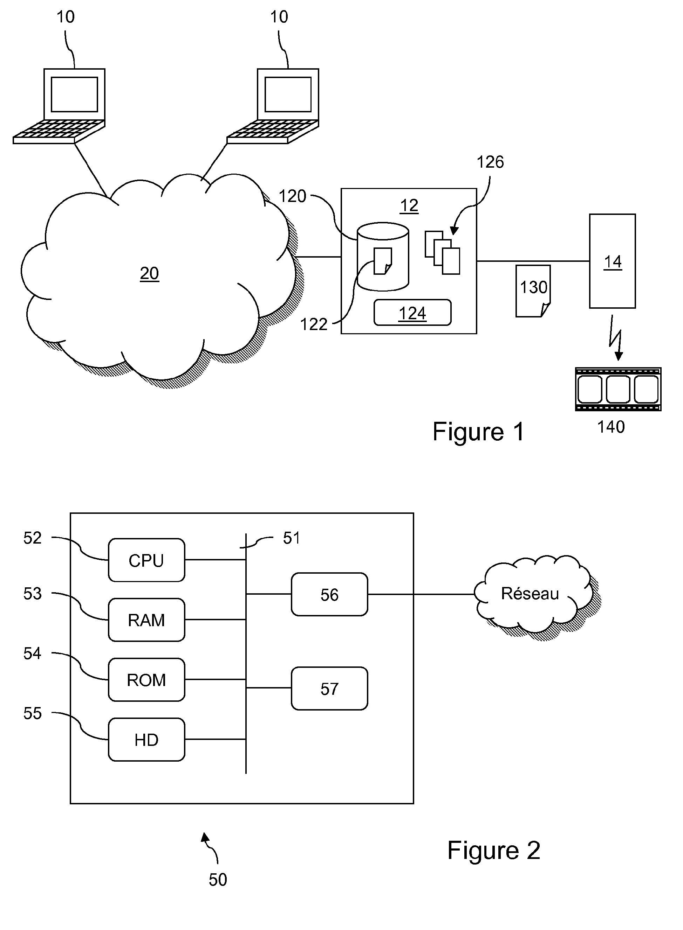

En référence à la **figure 1**, un exemple de système pour la mise en oeuvre de l'invention comprend une pluralité de terminaux d'utilisateurs 10 et un serveur de traitement 12, reliés à un réseau de communication 20. De façon préférée, l'invention est mise en oeuvre au travers d'applications web, auquel cas le réseau 20 est l'Internet, les terminaux sont des équipements (ordinateurs, téléphones, etc.) pouvant se connecter à l'Internet, et le serveur de traitement 12 est un serveur web. A ce titre, les terminaux 10 sont de type classique et ne seront pas décrits plus en détail.

Le serveur de traitement 12 est en outre relié, par une liaison dédiée, à un serveur de montage vidéo 14, par exemple un serveur embarquant la technologie Stupeflix dont une description est donnée à l'adresse *wiki.stupeflix.com.* Ce serveur Stupeflix présente une interface API permettant de lui fournir un fichier de définition 130 d'une séquence vidéo (ou film) de sorte à générer le film vidéo correspondant 140. Le fichier de définition est notamment sous le format XML et décrit la séquence vidéo à générer à partir de balises, appelées "atomes", telles que <image>, <video>, <audio>, <effect>, <filter>, <transition>, <sequence>, <stack>, etc. Ces différentes balises, définies à l'adresse susmentionnée, ne sont pas décrites plus en détail.

Par exemple, le fragment XML suivant correspond à un effet de rotation entre trois images consécutives, pendant 5 secondes :
<effect type="rotator" duration="5.0" timeOffset="0.0" >
<image filename="http://www.stupeflix.com/images/image1.jpg"/>
<image filename="http://www.stupeflix.com/images/image2.jpg"/>
<image filename="http://www.stupeflix.com/images/image3.jpg"/>
</effect>

En variante, le serveur de montage 14 peut faire partie intégrante du serveur de traitement 12, voire être accessible par le serveur 12 via le réseau Internet 20.

Le serveur web 12 propose notamment un service web de stockage de données numériques associé à une base de données 120, service auquel les utilisateurs 10 accèdent (via un navigateur web) pour stocker leurs souvenirs, c'est-à-dire des fichiers médias 122 au format numérique tels que des vidéos, des fichiers image, des fichiers sons ou encore des fichiers de texte. Le service web de stockage propose également une option de création et de génération d'une séquence vidéo à partir de tout ou partie des souvenirs stockés par l'utilisateur.

L'utilisateur peut ainsi déclencher un traitement de création d'une telle séquence vidéo, par des moyens logiciels de traitement 124.

La **figure 2** montre schématiquement un système 50 pour la mise en oeuvre de l'invention, notamment le serveur de traitement 12 et/ou le serveur de montage vidéo 14.

Le système 50 comprend un bus de communication 51 auquel sont reliés une unité centrale de traitement ou "microprocesseur" 52, une mémoire vive 53, une mémoire morte ROM 54, un disque dur 55, une interface de communication 56 avec un réseau et éventuellement d'autres périphériques 57 (dispositif d'affichage et de pointage pour un administrateur, lecteur de disquette ou disques, etc.).

La mémoire morte 54, de préférence programmable par l'utilisateur, comprend les programmes dont l'exécution permet la mise en oeuvre du procédé selon l'invention, à savoir les pages du site Internet offrant le service de création d'une séquence vidéo et les codes logiciels (ou applications) pour réaliser les traitements en vue de cette création, voire de la génération du montage vidéo.

Lors de l'exécution de ceux-ci, le code exécutable des programmes est chargé en mémoire vive 53, type RAM, et exécuté par le microprocesseur 52. Cette exécution permet la création d'une séquence vidéo 140 comme décrite par la suite, ainsi que l'exécution du service web sollicité (fourniture des pages web correspondantes).

Le disque dur 55 ou tout autre mémoire morte programmable comprend la base de données 120 dans laquelle les différents utilisateurs du service web viennent stocker leurs souvenirs.

L'interface de communication 56 est de préférence de type interface réseau supportant le protocole IP.

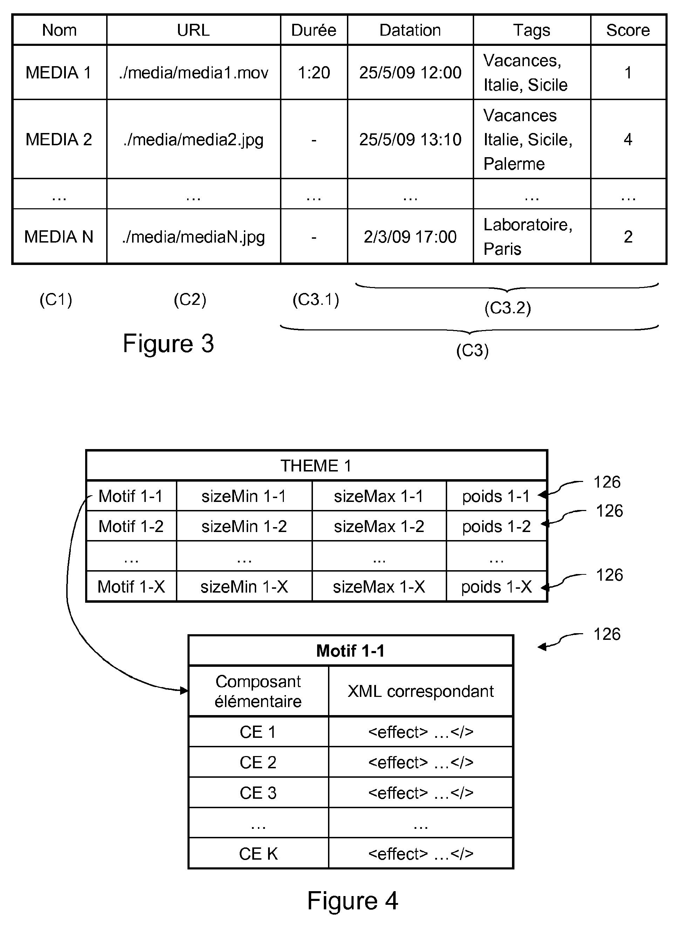

Le système décrit ici et, particulièrement, l'unité centrale 52, sont susceptibles de mettre en oeuvre tout ou partie des traitements décrits ci-après en lien avec les **figures 3** à **10**, pour mettre en oeuvre les procédés objets de la présente invention et constituer les systèmes objets de la présente invention.

La **figure 3** illustre, sous la forme d'une table, le contenu de la base de données 120 pour un utilisateur donné. Pour chaque fichier média 122, on dispose d'un nom de fichier (colonne C1), d'un emplacement URL du fichier média dans la base (C2) et d'un ensemble de données de description du fichier média (C3).

Dans l'exemple de la figure, l'utilisateur dispose de N fichiers médias.

Les données de description peuvent être inhérentes au contenu du fichier média (C3.1) ou être des métadonnées ajoutées par exemple par l'utilisateur (C3.2).

Les données de description inhérentes au fichier média, ou "données de média", peuvent être indiquées dans le fichier par l'équipement qui l'a créé ou être renseignées après analyse. Cette analyse peut être menée par les moyens de traitement 124, soit périodiquement, soit lors des opérations de création d'une séquence vidéo par l'utilisateur.

A titre d'exemple, les données de média peuvent comprendre :
- pour les photos ou images : la taille de la photo, la couleur dominante, la position du ou des visages après leur détection;
- pour les sons : le type de son (musique, parlé), une transcription des paroles en texte, un rythme ou "tempo" (pulsations par minutes ou BPM);
- pour les vidéos : les mêmes données que pour les photos/images et les sons, et en outre la durée du film, le débit ou *bitrate*, un texte (le texte apparaissant dans la vidéo ou une retranscription de portions "parlées" de la bande son) et éventuellement des mots-clés.

Les métadonnées sont par exemple, indifféremment du type de fichier média (son, image, film), des données de géolocalisation, une datation (date et heure), des étiquettes/mots clés ou *tags,* une valeur de note/score à partir de laquelle on pourra identifier des fichiers médias prioritaires ou "clés", des commentaires sous forme de texte, des statistiques par exemple de visualisation ou d'édition, des photos, l'identification de l'appareil ou du type d'appareil de capture utilisé, etc.

Pour la mise en oeuvre de l'invention, le serveur de traitement 12 comprend par ailleurs une pluralité de motifs vidéo 126 ou *templates* ou *patterns* selon la terminologie anglo-saxonne. Ces motifs vidéo sont mémorisés sous la forme de fichiers numériques au sein de bibliothèques thématiques numériques comme décrites ci-après.

La notion de "motif" est largement connue de l'homme de l'art et recouvre substantiellement, pour une application vidéo, un modèle ou une définition spatiotemporelle de rendu visuel pour un ou plusieurs fichiers médias qu'il reste à déterminer. De ce fait, les motifs vidéo comprennent des emplacements fictifs ou *placeholders* au niveau desquels seront identifiés, par exemple à l'aide de leurs URL, les fichiers médias à afficher avec le rendu visuel correspondant.

Les motifs vidéo sont des unités indépendantes interchangeables qui peuvent donc être organisés de diverses manières, pour fournir une composition de rendus visuels correspondant à la définition de la séquence vidéo à générer. Selon l'invention, cette composition est générée aléatoirement à partir des souvenirs de l'utilisateur, comme on le verra par la suite.

En outre, la composition peut faire intervenir des transitions (au sens Stupeflix par exemple) entre deux motifs successifs pour adoucir les changements visuels entre deux fichiers médias consécutivement affichés.

Dans le cadre de la présente invention, chaque motif vidéo 126 sélectionné définit le rendu visuel qui sera appliqué à une pluralité de fichiers médias: il contient ainsi au moins un composant élémentaire modèle qui sera appliqué à l'ensemble de cette pluralité de fichiers médias sous la forme d'une pluralité d'atomes Stupeflix.

Ces motifs vidéo sont prédéfinis, par exemple par un designer vidéo, au moyen des balises Stupeflix précitées. Ils sont alors mémorisés sous forme d'un ou plusieurs fichiers XML.

Notamment, plusieurs bibliothèques de motifs vidéo peuvent être prévues, chacune correspondant à un thème particulier proposé à l'utilisateur, par exemple "Emotion", "Dynamique" et "Profusion". Les motifs vidéo de chaque thème ont été prédéfinis pour fournir des rendus visuels en lien avec le thème correspondant, en jouant par exemple avec les effets ou les transitions prévus par le moteur Stupeflix.

Dans un mode de réalisation, chaque bibliothèque prend la forme d'un unique fichier XML qui décrit chacun des motifs vidéo qu'elle contient, en les séparant par une balise <motif> par exemple.

De façon similaire, une bibliothèque des transitions possibles entre deux motifs vidéo est prévue.

La **figure 4** illustre schématiquement, sous la forme de tables, le contenu d'un fichier XML définissant les motifs vidéo 126 pour un thème THEME 1.

Un motif vidéo 126 est défini de façon générale par un nom "Motif 1-1 ", une taille d'utilisation minimale "sizeMin 1-1 ", une taille d'utilisation maximale "sizeMax 1-1" et une pondération "poids 1-1".

En outre, chaque motif 126 est composé d'un ou plusieurs composants élémentaires modèles "CE" (première colonne) correspondant à des balises XML Stupeflix (deuxième colonne) dotées éventuellement d'un emplacement fictif pour recevoir un fichier média.

Les tailles d'utilisation minimale et maximale définissent une plage (éventuellement non continue) de nombres de fichiers médias qui peuvent être intégrés dans le motif vidéo correspondant en procédant si nécessaire à la duplication ou répétition de composants élémentaires modèles pour plusieurs fichiers médias à intégrer. La taille variable du motif vidéo s'ajuste donc en fonction du nombre de composants élémentaires dupliqués. Cette taille variable reflète le nombre d'emplacements fictifs autorisés pour l'utilisation de ce motif. Bien entendu, ces deux tailles sont différentes dès lors qu'un composant élémentaire ayant un emplacement fictif peut être répété.

Cette capacité de répétition permet notamment de réduire le nombre de motifs vidéo permettant de décrire les fichiers médias quel qu'en soit leur nombre.

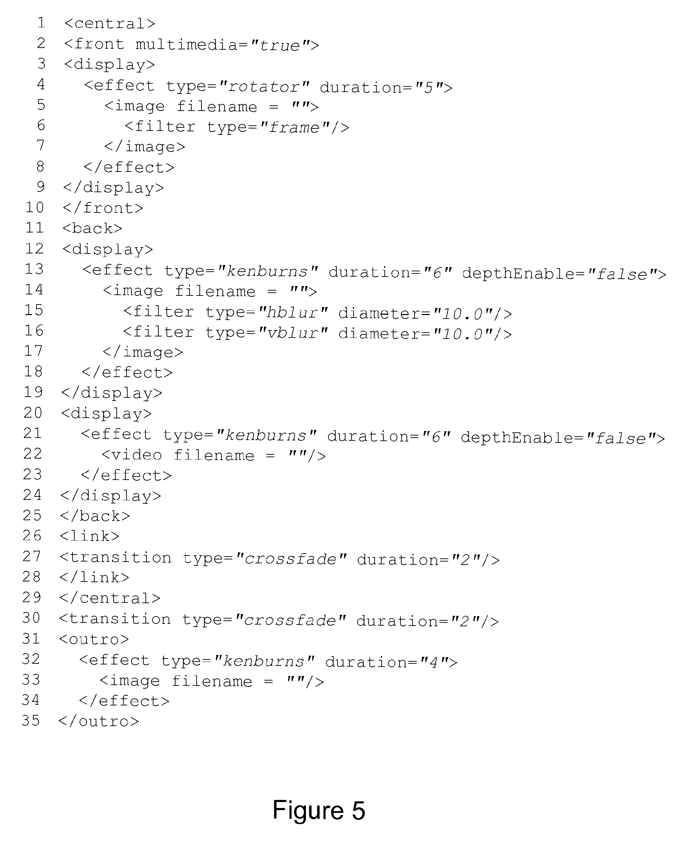

La **figure 5** représente un exemple d'extrait XML pour un motif vidéo 126. Cet exemple correspond à rendu visuel commençant par une pile centrale superposant un premier plan destiné à recevoir un premier fichier média (lignes 2 à 10), sur un arrière-plan destiné à recevoir une photo (lignes 12 à 19) puis une vidéo (lignes 20 à 24), une transition *crossfade* entre cette photo et cette vidéo de l'arrière-plan étant prévue (lignes 26-28).

Le rendu visuel se poursuit avec une séquence de sortie *("outro" -* lignes 31 à 35) après une transition visuelle de type *crossfade* (ligne 30).

Dans cet exemple, on retrouve, aux niveaux hiérarchiques les plus bas, les balises Stupeflix, ici <effect>, <image>, <filter> (lignes 4 à 8 par exemple), la balise <image> comprenant notamment l'emplacement fictif *" filename="""* destiné à recevoir l'indication d'un fichier média.

Cette conservation des balises Stupeflix aux niveaux hiérarchiques les plus bas permet de simplifier d'éventuelles opérations de test des motifs vidéo ainsi définis.

Les balises de plus haut niveau hiérarchique, notamment <central>, < front>, <display>, <link> et <outro>, sont définies par la suite, pour permettre une mise en oeuvre efficace de l'invention, notamment lors des opérations de génération du fichier XML à fournir à l'API Stupeflix du serveur 14.

Ce sont les fichiers XML définissant les bibliothèques qui sont chargés, généralement en mémoire vive 53, par l'application de création de la séquence vidéo. Ce chargement peut être opéré à chaque demande de création d'une séquence vidéo par un utilisateur, ce qui permet de réduire la mémoire occupée par ce chargement en l'absence de demande. En variante toutefois, ce chargement peut être effectué une seule fois au lancement de l'application de création, ce qui permet de réduire la charge de chargement lorsque de nombreuses demandes se succèdent.

Dans un mode de réalisation, l'application de création est orientée objet de telle sorte que le chargement des motifs vidéo 126 est effectué sous forme de création d'objets correspondant aux balises XML comme suit.

L'opération de conversion des fichiers XML en objets consiste à désérialiser ces fichiers. A titre d'exemple, il peut s'agir d'une désérialisation manuelle consister à analyser syntaxiquement (ou *parser*) le fichier XML pour construire manuellement chacun des objets rencontrés. Cette approche manuelle offre un contrôle total et est mise en oeuvre au travers d'une méthode de désérialisation, notée fromXML(), prévues dans les classes d'objets telles que définies par la suite

En variante, on peut avoir recours à une bibliothèque de méthodes externes de désérialisation automatique.

Bien entendu, d'autres mécanismes que les objets peuvent être utilisés pour manipuler les motifs vidéo 126 et créer la séquence vidéo. Par exemple, on peut directement manipuler des fragments XML.

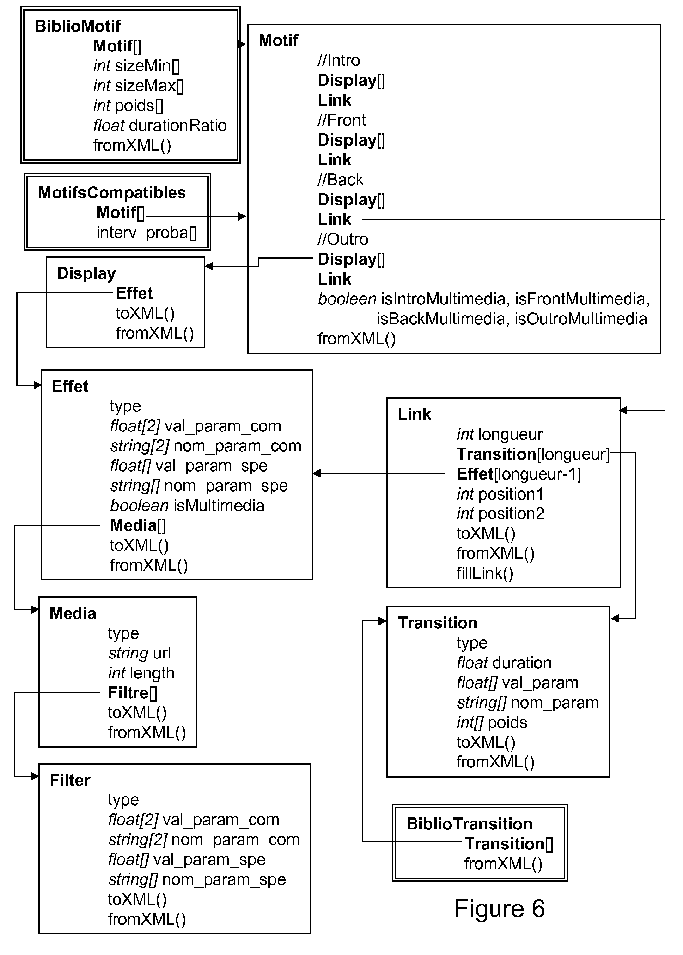

La **figure 6** illustre différentes classes d'objets (en gras sur la figure) mises en oeuvre pour charger les motifs vidéo et les transitions entre motifs vidéo.

Une classe générale **BiblioMotif** regroupe l'ensemble des motifs **Motif[]** d'une bibliothèque thématique (et donc d'un même fichier XML de définition) et précise un coefficient de durée *durationRatio* applicable à l'ensemble des motifs de ce thème, ce coefficient permettant de moduler des durées par défaut attribuées aux composants élémentaires des motifs, pour par exemple faire une bibliothèque de motifs accélérés (reflétant le thème "dynamique").

Cette classe générale définit, pour chaque motif **Motif**[i], une taille minimale *sizeMin*[i]*,* une taille maximale *sizemax*[i] (comme définies précédemment) et un poids *poids*[i]*.* En outre, la méthode fromXML() est associée à cette classe pour permettre la désérialisation des fichiers XML de définition des bibliothèques de motifs vidéo.

La sous-classe **Motif** comprend, quant à elle, une définition d'un motif vidéo en composants élémentaires modèles de rendu visuel ayant des emplacements fictifs pour y préciser les fichiers médias à afficher, comme décrit par la suite. Ces composants élémentaires modèles sont ici les objets **Display** correspondant sensiblement aux éléments <effect> de Stupeflix.

Le motif vidéo donne une définition complète d'une portion de séquence vidéo, à l'exception des URL des fichiers médias à afficher ainsi que sa taille qui peut varier en fonction de la répétition de certains composants élémentaires modèles.

Pour les besoins d'illustration, on choisit un motif de la forme séquence (au sens temporel) d'introduction, partie centrale composée d'une pile de deux séquences, puis séquence de sortie, ces trois portions étant liées par deux transitions pour fluidifier l'enchaînement.

Une pile consiste à empiler (avec un rendu visuel du premier plan vers le dernier plan) plusieurs éléments visuels. Une séquence est en revanche une succession dans le temps d'éléments visuels.

Dans l'exemple de la **figure 5** qui ne comprend aucune introduction, la pile centrale est identifiée par la balise <central> (une première séquence <front> et une deuxième séquence <back>) et la séquence de sortie par la balise <outro>.

De façon générale, pour une telle séquence (intro, front, back, outro), on prévoit ainsi que le motif définit un ou plusieurs composants élémentaires modèles correspondant à un ou plusieurs critères respectifs relatifs aux fichiers médias. Ainsi, lorsqu'un fichier média sera traité, on choisira le composant élémentaire modèle qui correspond auxdits critères relatifs au fichier média.

Pour des raisons de simplification d'illustration, on choisit pour la suite de se concentrer sur les fichiers médias visuels uniquement, c'est-à-dire de type image/photo ou vidéo. Ainsi, on prévoir que les séquences comprennent un composant élémentaire modèle **Display** indifférent du type de fichier média ou deux composant élémentaire modèle **Display** dédiés aux fichiers médias de type respectivement image/photo et vidéo.

Ainsi, les séquences du motif vidéo de notre exemple comprennent au maximum deux composants élémentaires et une transition entre eux.

Pour notre exemple, la sous-classe **Motif** est définie par, successivement, un tableau d'au plus deux composants élémentaires **Display[]** et un lien **Link** pour chacune des séquences (dans l'ordre, l'introduction, le premier plan de la pile centrale, l'arrière plan de la pile centrale et le séquence finale).

Elle comprend en outre des booléens *isIntroMultimedia, isFrontMultimedia, isBackMultimedia* et *isOutroMultimedia* prévus pour indiquer si chacune des séquences correspondantes (Intro, Front, Back, Outro) comprend des **Display** multimédia (booléen vrai) ou non (booléen faux). On entend par "**Display** multimédia" le fait que cet élément définit un rendu visuel affichant simultanément plusieurs fichiers médias. Cela correspond par exemple à un <effect> Stupeflix dans lequel on indique plusieurs images. Ces booléens permettent de connaître rapidement si plusieurs images peuvent être affectée à un même élément **Display,** sans avoir à descendre dans les sous-éléments composant cet élément. On évite ainsi des traitements inutiles.

Enfin, on associe à cette sous-classe la méthode de désérialisation fromXML() similaire à celle décrite précédemment, méthode qui est appelée récursivement d'objet en objet, ici par la méthode **BiblioMotif**.fromXML().

Comme il ressort de l'exemple de la **figure 5** notamment, la sous-classe **Display** comprend uniquement un objet **Effet**, correspondant à la balise <effect> de Stupeflix prévue pour afficher un ou plusieurs fichiers médias qui y seront indiqués. On lui associe en outre deux méthodes, l'une de désérialisation fromXML() déjà définie (et appelée récursivement par **Media**.fromXML()) et l'autre de sérialisation toXML() prévue pour générer un fichier XML de définition de la séquence vidéo à créer, comme il sera vu par la suite.

De même la classe lien **Link** comprend simplement un objet **Transition,** correspondant à la balise <transition> de Stupeflix, ainsi que les deux méthodes fromXML() et toXML().

Dans une version améliorée, les liens **Link** prévus pour lier deux composants élémentaires **Display** peuvent intégrer des objets **Effet** afin de générer un rendu plus complexe de la transition entre les deux composants élémentaires d'affichage. Dans ce cas, l'objet **Link** est une suite transition-(effet-transition)**longueur* au sens des <effect> et <transition> de Stupeflix.

L'objet **Link** précise également, au travers de paramètres *position1* et *position2,* les listes des index des effets du **Link** dans lesquels les fichiers médias des composants élémentaires respectivement précédent et suivant seront intégrés. On peut notamment limiter ces listes à un seul fichier média. Les deux méthodes fromXML() et toXML() sont par ailleurs attachées à cette classe **Link.**

Les transitions sont largement définies dans la spécification Stupeflix susmentionnée. On notera qu'elles présentent généralement un paramètre "type", une durée "duration" et des paramètres complémentaires en fonction des types (par exemple une "direction", un "angle", etc.). Dans la classe **Transition** définie pour la mise en oeuvre de l'invention, ces paramètres complémentaires sont mémorisés dans les tableaux val_param[] et nom_param[] (respectivement les valeurs et les noms pris par ces paramètres). Les deux méthodes fromXML() et toXML() sont par ailleurs attachées à cette classe **Transition.**

De façon similaire, la classe **Effet** reprend les différents paramètres prévus par Stupeflix pour la balise <effect> (les 2 paramètres communs *[param_com]* "duration" et "timeOffset", et les paramètres spécifiques, par exemple "direction", "adapter", etc.), et ajoute un booléen *IsMultimedia* pour indiquer si l'effet défini est appliqué à un (booléen faux - mono-média) ou plusieurs fichiers médias (booléen vrai - multimédia) renseignés dans le tableau d'objets **Media[].**

Comme il est difficile de prédire la taille de la liste de fichiers médias d'un effet (avant de savoir à quel événement on va l'appliquer), lors du chargement des fichiers XML de bibliothèques de motifs vidéo 126, on utilisera une liste d'un seul élément **Media** disposant à ce stade d'une URL vide (emplacement factice destiné à recevoir l'adresse du fichier média auquel sera appliqué l'effet de rendu visuel), que l'on étendra le cas échéant en clonant cet élément **Media** plusieurs fois lors de la construction du film.

Toutefois, si l'on souhaite définir, dans le motif vidéo, un effet avec plusieurs fichiers médias ayant des traitements locaux différents (à l'aide des <filter> Stupeflix), on peut prévoir initialement que le tableau **Media**[] comprend autant d'éléments **Media** que l'on souhaite de traitements locaux différents.

L'objet **Media** utilisé ici mutualise les différentes balises de fichiers médias prévues par Stupeflix (par exemple <image>, <video>, <audio>, <text>), en y ajoutant un champ *type* pour y préciser cette différence. Les autres paramètres sont classiques, et notamment l'objet **Filtre** également défini par Stupeflix.

Les deux méthodes fromXML() et toXML() sont par ailleurs attachées à ces trois classes **Effet, Media** et **Filtre.**

A noter que, comme défini par Stupeflix, les effets <effect> correspondent à un traitement spatial des fichiers médias correspondant (déplacement, effet 3D, zoom, etc.), alors que les filtres <filter> correspondent à un effet de rendu à l'intérieur du fichier média de type visuel (par exemple traitement des pixels : flou, couleur, crop, cadre, etc.).

Ainsi, selon Stupeflix toujours, un élément <effect>, encapsulant un ou plusieurs médias encapsulant eux-mêmes des filtres, est une brique de base pour créer un film, d'où la terminologie de composant élémentaire adoptée ci-dessus pour désigner les **Display** (équivalent à **Effet**).

De façon symétrique à la bibliothèque des motifs vidéo 126, une classe **BiblioTransition** est créée pour définir la bibliothèque des transitions utilisées pour lier des motifs vidéo entre eux dans la composition de la séquence vidéo en construction.

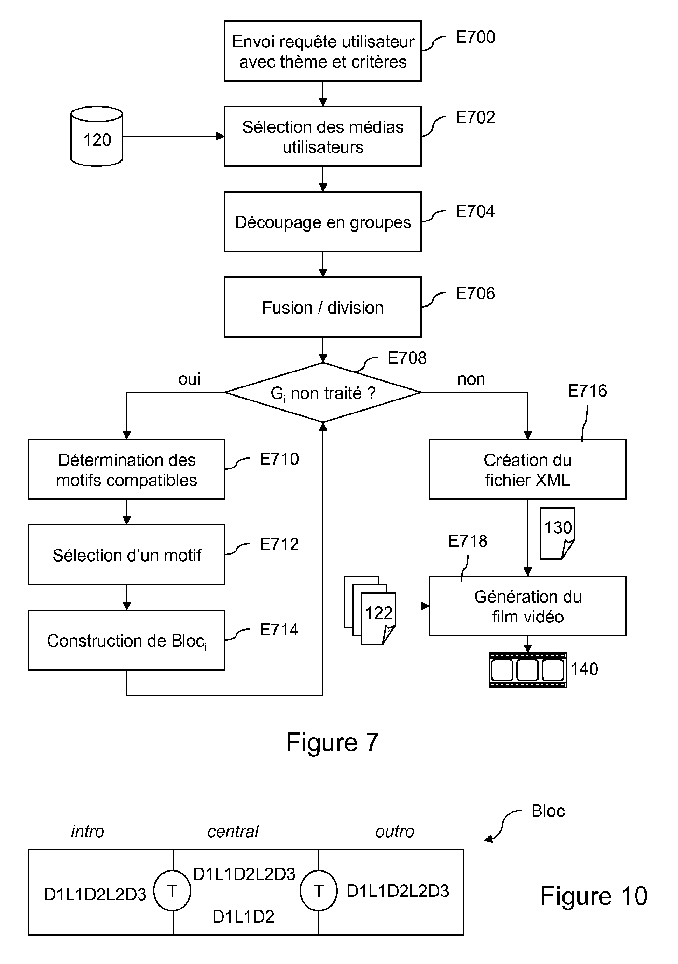

Ayant chargé en mémoire l'ensemble des motifs vidéo prédéfinis 126, le procédé de création d'une séquence vidéo selon l'invention peut maintenant être décrit en référence à la **figure 7**.

La première étape E700 consiste pour l'utilisateur à émettre une requête de création d'une telle séquence vidéo. Cette requête peut notamment être générée via un navigateur web par lequel l'utilisateur 10 accède au service de création d'un film vidéo proposé par le serveur 12.

Dans l'interface du navigateur web, l'utilisateur peut notamment indiquer un thème préféré, par exemple "Dynamique", ainsi que des critères de sélection parmi les fichiers médias dont il dispose, par exemple les critères "tag=Sicile" et "date=2009". La requête, type http, contenant le thème et les critères de sélection est reçue par le serveur 12, ce qui déclenche l'exécution de l'application de création d'une séquence vidéo.

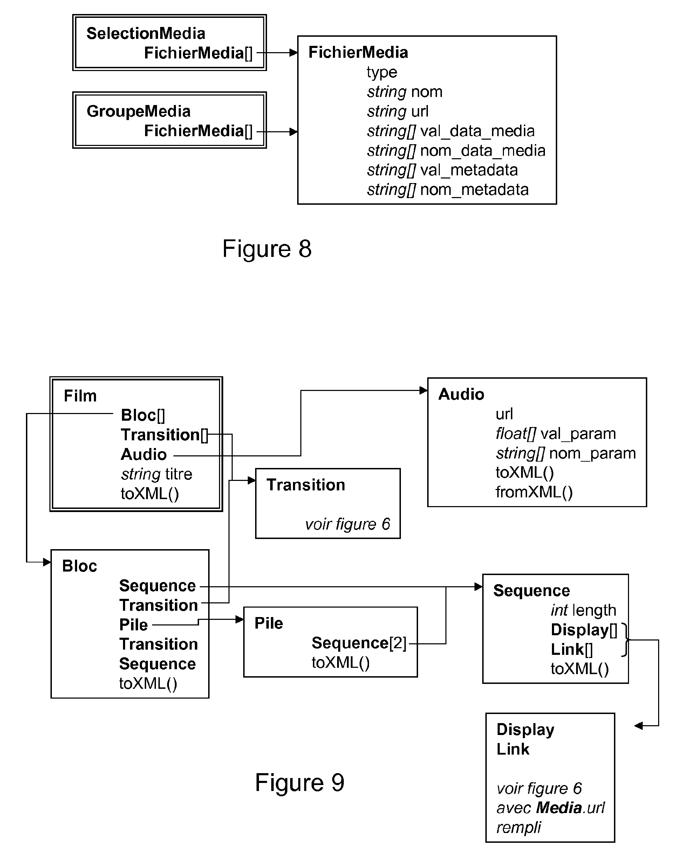

A réception de la requête, le serveur 12 accède à la base 120 et procède à la sélection des fichiers médias 122 choisis par l'utilisateur à l'aide des critères de sélection spécifiés dans la requête (étape E702). Les fichiers obtenus sont mémorisés à l'aide d'objets informatiques reposant sur une classe **SelectionMedia** et une classe **FichierMedia** telles qu'illustrées sur la **figure 8**. Ces classes permettent la mémorisation de données média (*data_media* de la colonne C3.1 - **figure 3**) et de métadonnées (*metadata* de la colonne C3.2). Par anticipation et pour économiser l'utilisation de la mémoire vive du serveur 12, on prévoit de mémoriser uniquement les données média et métadonnées utiles pour la suite du traitement, par exemple les mots clés (tags) et la datation des fichiers médias 122.

A partir de la sélection de fichiers médias 122 pour l'utilisateur, le traitement consiste à l'étape E704 à décomposer cette sélection en groupes Gᵢ de fichiers médias qui présentent, au sein d'un même groupe, une cohérence élevée.

Cette détermination du degré de cohérence est réalisée en fonction d'au moins un critère de cohérence, par analyse des fichiers médias, par exemple à partir des données médias et des métadonnées. Cette analyse peut permettre en outre de positionner les différents fichiers médias les uns par rapport aux autres et donc de les ordonner (selon un critère principal par exemple).

A titre illustratif tel que décrit ci-après, on peut tenir compte de critères de cohérence tels que les dates des fichiers médias (regroupement temporel) et les mots clés associés (regroupement sémantique) pour effectuer un regroupement des médias. En variante ou en combinaison, il est possible de tenir compte d'autres (méta)données, telle que par exemple la thématique couleur, la géolocalisation, la présence de visages, etc.

A noter que lors de cette analyse, certaines valeurs seuil peuvent être définies pour éliminer certains fichiers médias de la sélection qui sont peu pertinents. Ces valeurs seuil peuvent par exemple découler du thème choisi par l'utilisateur (un thème de type "portrait" peut supprimer tous les fichiers médias n'ayant pas de visage), être définies par rapport à l'ensemble des fichiers médias de la sélection (supprimer un intrus eu égard à certains critères principaux) ou dépendre de certains types de fichiers médias non pris en charge.

Pour la suite notamment, seuls les fichiers médias de type visuel, vidéo et photo/image, seront pris en considération pour la génération de la séquence vidéo. Ainsi, les fichiers médias du type audio ou texte sont éliminés lors de cette étape.

Dans notre exemple illustratif, un groupe Gᵢ consiste en une suite, couvrant un intervalle temporel inférieur à une première valeur seuil S1 (par exemple 24h, paramètre adaptable), de fichiers médias 122 dont chaque décalage temporel avec le fichier précédent est inférieur à une seconde valeur seuil S2 (par exemple 30 min, paramètre également adaptable) et dont la proximité des mots-clefs (s'il y en a assez) est suffisamment élevée.

On initialise un premier groupe G₁ avec le premier média M₁ dans l'ordre chronologique.

On note Mⱼ chaque fichier média 122 pris dans l'ordre chronologique, M_{Gi} le premier fichier média du groupe Gᵢ (premier au sens temporel), δt(Mⱼ, Mₖ) la différence temporelle entre Mⱼ et Mₖ, Ntag(Mⱼ) le nombre de tags du fichier Mⱼ et NCtag(Mⱼ, Mₖ) le nombre de tags en commun entre Mⱼ et Mₖ. On effectue alors les opérations de regroupement suivantes, pour successivement chaque fichier média Mⱼ, avec Gᵢ le groupe courant:

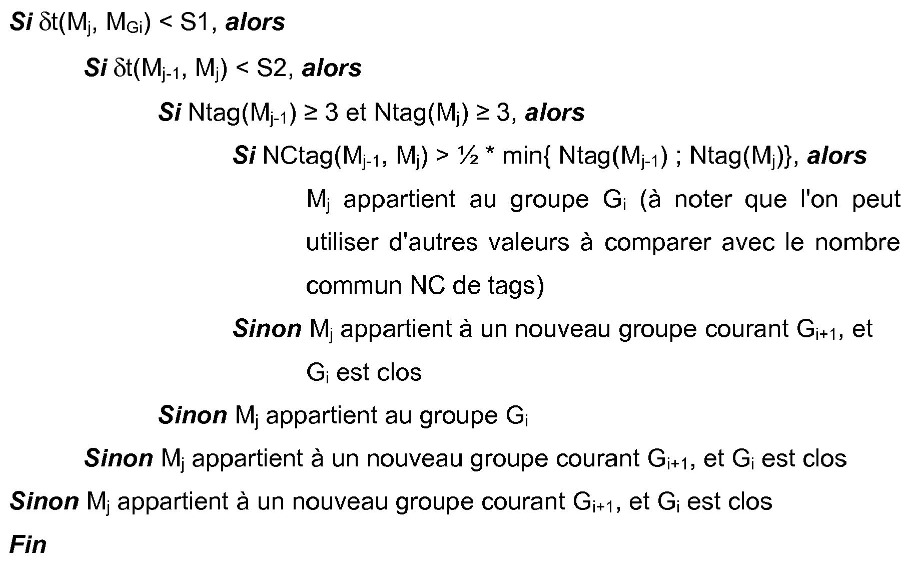

A l'issue de l'étape E704, on dispose ainsi d'un ensemble de groupes Gᵢ répartissant l'ensemble des fichiers médias 122 sélectionnés dans leur ordre chronologique.

Pour mémoriser ces groupes, on prévoit l'utilisation d'une classe **GroupeMedia** comme illustrée sur la **figure 8**. A chaque instanciation d'un objet **GroupeMedia** correspond un groupe Gᵢ.

Une fois que les fichiers médias 122 sont regroupés et ordonnés, l'invention prévoir d'appliquer une traitement vidéo de rendu visuel qui est choisi aléatoirement et donc différent pour chaque groupe. En appliquant un même traitement de rendu pour les fichiers médias d'un même groupe, on conserve la cohérence visuelle des groupes de médias.

Au préalable, l'étape optionnelle E706 peut être réalisée pour uniformiser les tailles des groupes, afin de rendre plus régulier le rendu visuel ou le diversifier le cas échéant, mais également de permettre l'utilisation d'un nombre plus restreint de motifs vidéo 126 pour monter la séquence vidéo.

Cette étape E706 peut tout d'abord comprendre une sous-étape de regroupement des groupes Gᵢ orphelins (comprenant un seul fichier média). Ce regroupement est opéré pour des groupes Gᵢ adjacents et pour un maximum de 5 groupes.

Par exemple, si on a une série de groupes contenant respectivement 2, 1, 1, 1, 3 et 2 fichiers médias, on obtient après fusion, les groupes avec la distribution suivante: 2, 3, 3 et 2.

En revanche, la distribution 2, 1, 2, 1, 3 puis 2 reste inchangée, alors que la distribution 2, 1, 1, 1, 1, 1, 1, 1 puis 2 donne 2, 5, 2 et 2.

Cette étape E706 peut également comprendre une sous-étape de subdivision ou fragmentation des groupes Gᵢ qui présentent un trop grand nombre de fichiers médias, par exemple à compter de 10 fichiers médias.

Ainsi, pour une distribution de 12, 2, 4 puis 3, on obtient après subdivision 10, 2, 2, 4 et 3.

On passe maintenant à la création de la séquence vidéo en traitant successivement chaque groupe Gᵢ ainsi constitué (test E708).

Lors du traitement du premier groupe G₁, on initialise la séquence vidéo par l'instanciation d'un objet **Film** à partir de la classe du même nom (**figure 9**), en indiquant également :
- un titre, soit précisé par l'utilisateur lors de la requête, soit formé à partir des mots clés renseignés par l'utilisateur dans sa requête ("Sicile 2009" par exemple);
- la taille du tableau d'éléments **Bloc,** correspondant au nombre de groupes Gᵢ. En effet, comme il ressortira de la suite, l'élément **Bloc** est la réalisation d'un motif vidéo **Motif** pour un groupe Gᵢ. On entend par "réalisation" le fait que les emplacements factices sont alors renseignés par l'indication des emplacements des différents fichiers médias du groupe. La réalisation **Bloc** définit ainsi entièrement le rendu visuel d'un groupe de fichiers médias;
- la taille du tableau de **Transition** qui est la taille du tableau de **Bloc** réduit de 1;
- un objet **Audio** correspondant à une piste audio (mp3 par exemple) par défaut ou que l'utilisateur a indiquée.

A noter que lors de la composition de la séquence vidéo, on commence par ouvrir une pile (superposition temporelle de plusieurs éléments, ici audio et visuel) dans laquelle on met en premier l'élément **Audio,** en second la séquence principale du film (succession temporelle des rendus visuels des groupes Gᵢ), qui débute par le titre en plein écran sur fond noir suivi d'une transition de type par exemple *crossfade* vers le premier **Bloc** correspondant au premier groupe G₁. Lors de la "fermeture du film", il est donc prévu de refermer la séquence principale, puis la pile qui a été ouverte pour l'élément **Audio.**

L'élément **Audio** comprend notamment des paramètres optionnels tels que *duration, fadein, fadeout, skip, margin-start, margin-end, margin-both* ou le volume (1.0 par défaut).

La construction du Bloc de rendu visuel d'un groupe Gᵢ comprend alors une première étape E710 de détermination des motifs de la bibliothèque thématique choisie (dans notre exemple le thème "Dynamique") qui sont compatibles avec le groupe Gᵢ courant. Cette compatibilité peut tenir compte de divers paramètres, par exemple la taille NGᵢ du groupe Gᵢ (nombre de fichiers médias 122 qui y sont inclus) comparée aux tailles sizeMin et sizeMax de chacun des motifs vidéo 126 de la bibliothèque choisie.

En effectuant cette comparaison, on vérifie que la taille variable des motifs vidéo (la plage de nombres de fichiers médias dont ces motifs vidéo peuvent définir le rendu visuel) inclut la taille du groupe Gᵢ, et on s'assure donc que les motifs vidéos retenus permettent, chacun, d'afficher l'ensemble des fichiers médias constituant le groupe Gᵢ courant. Ainsi, on obtient l'ensemble des motifs compatibles, mémorisé par un objet **MotifsCompatibles (****figure 6****)**.

Puis à l'étape E712, on procède à la sélection aléatoire, pour le groupe Gᵢ courant, d'un motif vidéo compatible, en tenant compte éventuellement d'une distribution de probabilités associée à l'ensemble des motifs compatibles (en fonction d'une pondération *"poids"* associée à chaque motif vidéo).

Cette pondération peut être définie par le designer des motifs vidéo afin de favoriser certains d'entre eux pour les rendus visuels.

Par exemple, disposant des couples (Motif 1=A, poids 1=1), (Motif 2=B, poids 2=2) et (Motif 3=C, poids 3=3), on peut tirer une valeur aléatoire λ entre 0 et 1, disons λ=0,53.

On calcule d'abord les scores S compris entre 0 et 1 pour chacun des motifs, à partir des pondérations, à savoir:
- pour le motif A, le score SA=1/(1+2+3)=1/6;
- pour le motif B, le score S_{B}=2/(1+2+3)=1/3; et
- pour le motif C, le score S_{C}=3/(1+2+3)=1/2.

On sélectionne le motif A pour toute valeur aléatoire dans [0; 1/6[, le motif B pour toute valeur aléatoire dans [1/6; 1/2[ et le motif C pour toute valeur aléatoire dans [1/2; 1]. Ces intervalles de probabilités *("interv_proba")* sont notamment mémorisés dans les objets **MotifsCompatibles (****figure 6****)** dès qu'ils sont calculés afin de permettre leur exploitation de manière aisée.

En revenant à notre exemple, le motif C est donc sélectionné car λ=0,53.

A partir de ce motif vidéo sélectionné, on procède alors à la construction de l'élément **Bloc** correspondant, noté Blocᵢ pour le groupe Gᵢ, lors de l'étape E714.

Dans l'exemple des motifs vidéo retenus ci-dessus, un bloc Blocᵢ est constitué d'une séquence d'introduction, d'une pile centrale de deux séquences et d'une séquence de sortie, ces trois parties étant reliées par deux transitions.

La **figure 10** illustre schématiquement la constitution d'un tel **Bloc** définissant le rendu visuel d'un groupe Gᵢ, avec Di les **Display,** Li les **Link** composant les séquences, et T les transitions.

Le choix des deux transitions T peut être réalisé de façon aléatoire en se basant sur une distribution de probabilités associée à l'ensemble des transitions (de façon similaire à la sélection E712 du motif vidéo). Leurs identifiants sont alors renseignés dans l'objet Blocᵢ créé **(****figure 9****)**.

Ensuite, on construit successivement chacune des séquences d'introduction, de la pile centrale et de sortie, en les mémorisant à l'aide des objets **Sequence** et **Pile.** Les séquences pointent alors sur les objets **Display** et **Link** définis pour les séquences correspondantes au niveau du motif vidéo sélectionné, auxquels on incorpore les URL des fichiers médias du groupe Gᵢ.

Différentes stratégies d'incorporation des fichiers médias dans ces séquences peuvent être envisagées, comme par exemple une incorporation chronologique dans la séquence d'introduction, puis la séquence de premier plan de la pile centrale, puis la séquence d'arrière plan de la pile centrale, et enfin la séquence de sortie.

En variante, certains fichiers médias considérés comme "clés" peuvent être introduits de façon prioritaire dans la séquence d'introduction. Cette propriété "clés" peut être notamment précisée par l'utilisateur 10 dans l'une des métadonnées associées aux fichiers 122, par exemple sous forme d'un score **(****figure 3****)**. Dans ce cas, une identification du ou des deux fichiers médias clés du groupe Gᵢ présentant les meilleurs scores est réalisée de sorte que ceux-ci soit pris comme médias "clés" et introduit en début de Blocᵢ.

En variante encore, au lieu d'effectuer un remplissage des motifs vidéo à l'aide des fichiers médias pris dans l'ordre chronologique (éventuellement avec identification de médias clés), un ordre anti-chronologique ou un autre critère de tri que le critère temporel peut être utilisé.

En considérant notre exemple des séquences *Intro, Front, Back* et *Outro,* la construction du bloc Blocᵢ à partir des fichiers médias Mⱼ peut consister en les opérations suivantes, pour successivement chaque séquence:

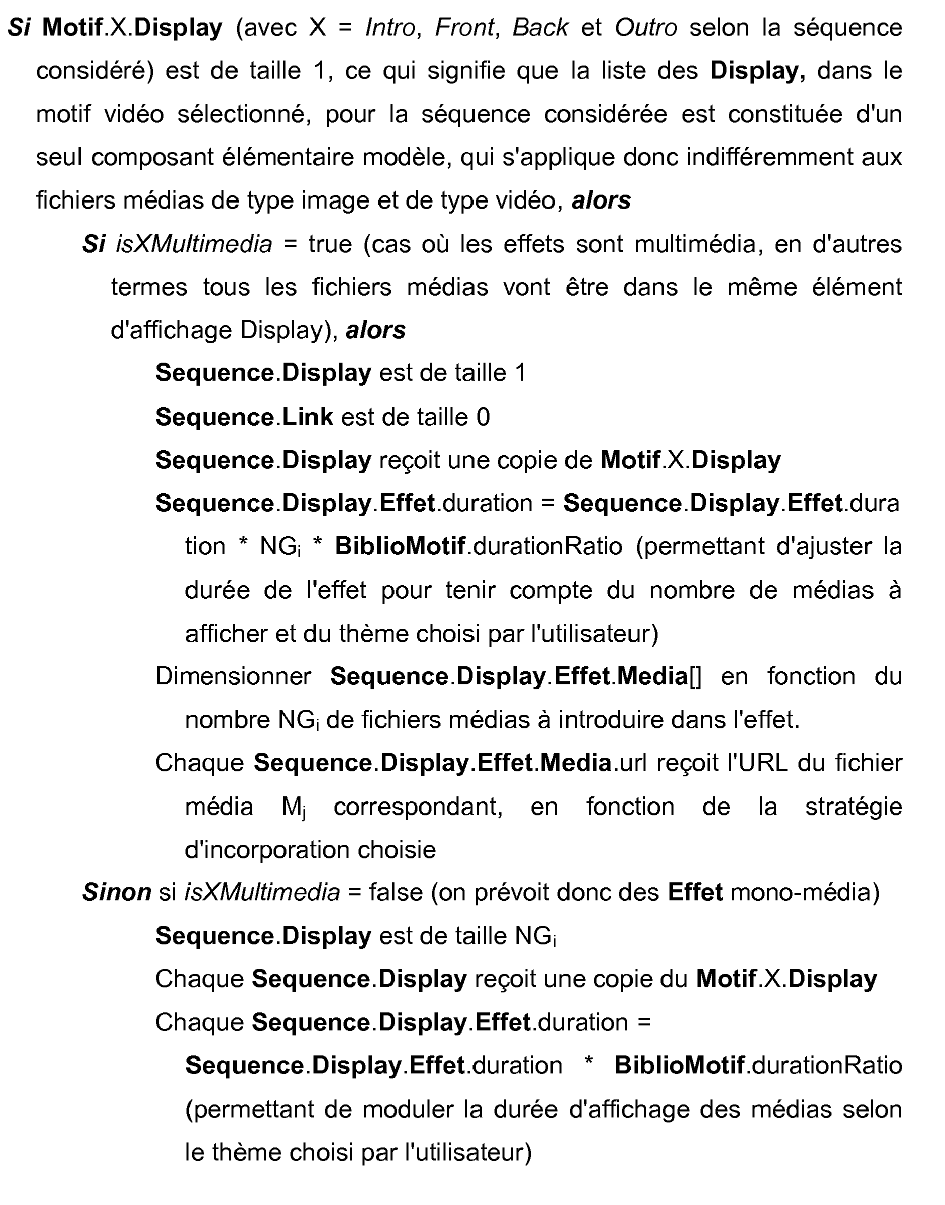

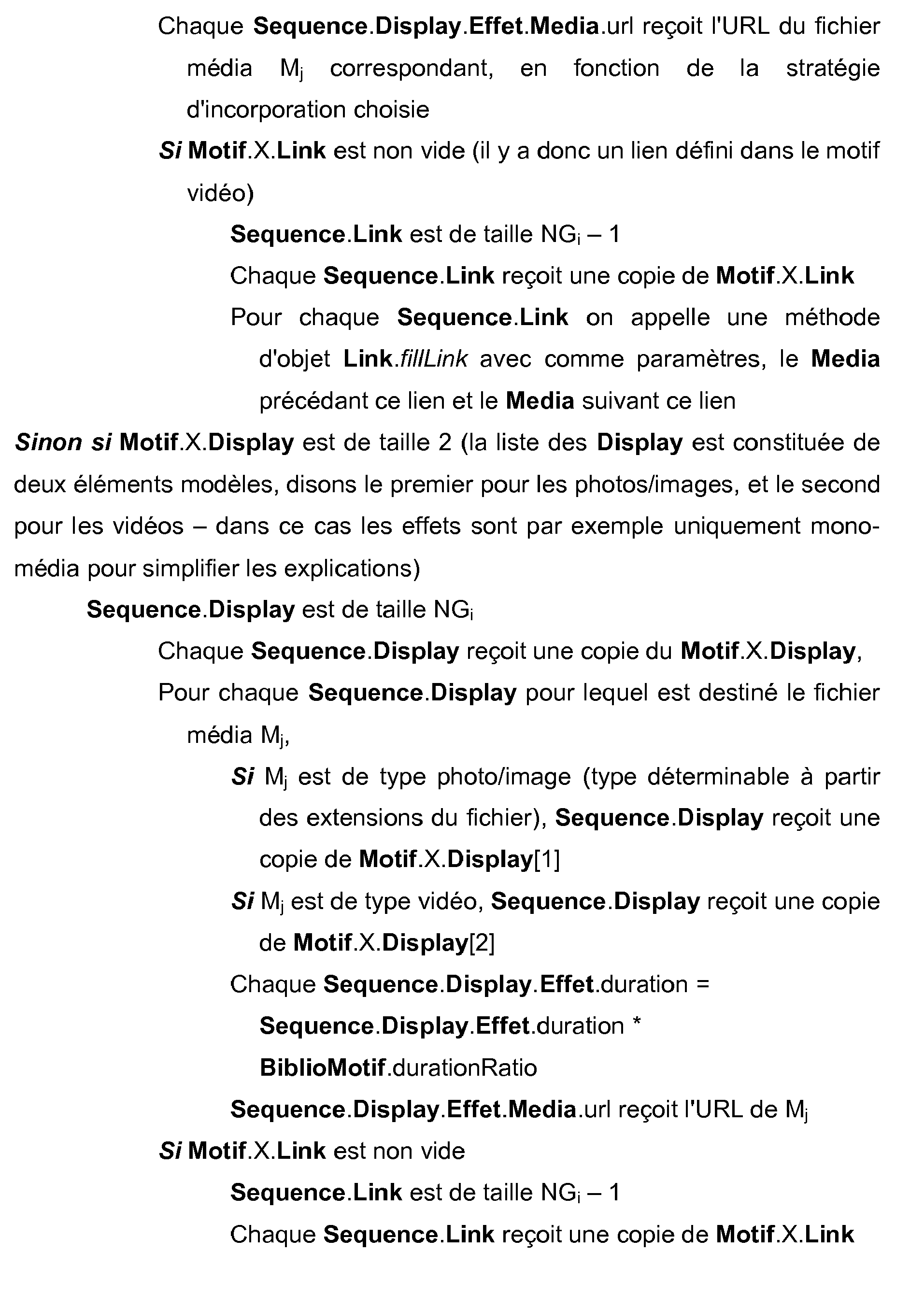

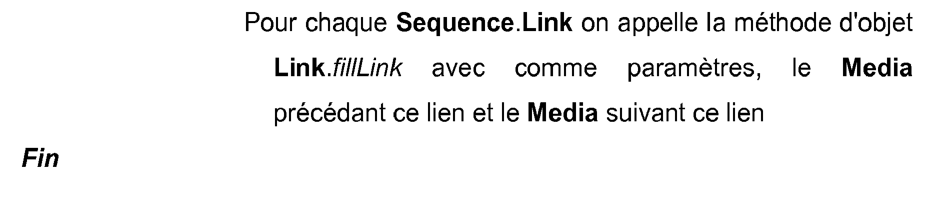

On voit ici qu'en présence d'effets mono-média, on duplique ou répète le ou les deux **Display** modèles définis dans le **Motif** sélectionné pour ajuster la réalisation de ce motif (c'est-à-dire le bloc Blocᵢ) à la taille du groupe Gᵢ courant. Ainsi, chaque fichier média 122 du groupe Gᵢ dispose, dans le bloc Blocᵢ construit, d'un composant élémentaire **Display** prévu pour son affichage.

A noter que la méthode *fillLink* pour un **Link** donné peut être réalisée comme suit:

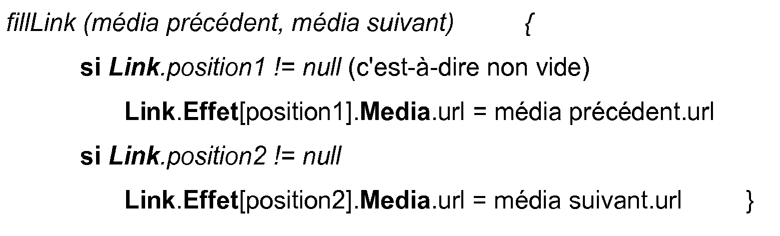

Une fois que tous les blocs Blocᵢ ont été construits, la définition du film est finie.

A l'issue des itérations de l'étape E714, on dispose donc en mémoire d'une description de la séquence vidéo au travers des objets **Film, Audio, Bloc, Pile, Sequence, Display, Effet, Media, Filtre, Link et Transition.**

Ces différentes classes comprennent toutes la méthode toXML() dont la fonction est de convertir les informations relatives à ces objets en portions XML compatibles avec le serveur de génération 14, dans notre exemple le moteur Stupeflix. L'étape E716 consiste donc en cette conversion, également appelée sérialisation, par appel récursif de la méthode toXML() depuis l'objet **Film** vers les objets de plus grande profondeur. La méthode **Film**.toXML() fait appel à la méthode toXML() de chacun de ses composants, etc.

La décomposition en objets utilisée ci-dessus présente l'avantage principal de réaliser une correspondance directe entre certains objets et les atomes Stupeflix : entre autres, les **Effet** correspondent aux balises <effect>, les **Media** aux balises <image> ou <video> selon le type du fichier média considéré, les **Filtre** aux balises <filter>, les **Transition** aux balises <transition>, le **Film** à la balise <movie>, les **Sequence** aux balises <sequence>, les **Pile** aux balises <stack> et l'**Audio** à la balise <audio>. Ainsi, le fichier XML à obtenir est tout simplement la représentation XML de l'objet **Film** qui a été construit précédemment.

En variante à l'utilisation des méthodes toXML(), on peut prévoir l'utilisation d'une bibliothèque de méthodes externes qui réalise une correspondance automatique objet/XML.

Le fichier XML 130 décrivant la séquence vidéo construite est donc généré progressivement, morceau XML correspondant à un objet par morceau XML correspondant à un autre objet.

Enfin, suite à la création de la séquence vidéo sous forme d'un fichier XML de définition, le traitement passe à l'étape E718 de génération, par le serveur 14, du film vidéo 140 à partir du fichier XML 130 et des fichiers médias 122 disponibles dans la base 120. Cette étape est classique en utilisant l'interface API de Stupeflix. Cette dernière permet de tirer profit des performances du serveur Stupeflix, notamment pour générer rapidement le film vidéo à partir du fichier XML.

Le film vidéo ainsi généré 140 est alors transmis à l'utilisateur 10 en réponse à sa requête initiale.

Le traitement selon l'invention réalise ainsi une génération aléatoire d'un film vidéo à partir d'un ensemble de fichiers médias de souvenirs, ce qui permet d'obtenir des films vidéo différents à chaque nouvelle demande. Cela permet à l'utilisateur de relancer sa demande tant que le film obtenu ne lui est pas satisfaisant. L'intervention de l'utilisateur est à cet effet des plus simples, limitée à l'indication d'un thème et à l'indication (optionnelle) de critères de sélection d'une partie de ses souvenirs.

En outre, l'analyse des fichiers médias pour les regrouper selon des critères de cohérence et l'application d'un motif vidéo prédéfini pour l'ensemble des fichiers médias d'un même groupe garantit, de façon techniquement efficace et simple, l'obtention d'un rendu visuel cohérent.

Les exemples qui précèdent ne sont que des modes de réalisation de l'invention qui ne s'y limite pas.

En particulier, bien que la description ci-dessus soit relative à la génération d'une séquence vidéo, l'invention peut s'appliquer à la génération de tout type de séquence média, et par exemple une séquence sonore.

A titre illustratif, si des souvenirs d'un utilisateur sont constitués par exemple d'enregistrements sonores de mammifères enregistrés dans un zoo à une date donnée, puis d'enregistrements sonores d'un concert à une autre date, puis d'enregistrements sonores de bruits de circulation à une autre date et enfin d'enregistrements sonores d'oiseaux dans un zoo à encore une autre date, l'invention permet d'obtenir un montage sonore offrant une forte cohérence de rendu sonore.

En effet, ces enregistrements sont regroupés en quatre groupes selon leurs dates et on applique à chaque groupe ainsi constitué un motif de rendu prédéfini, c'est-à-dire des enchaînements sonores (effets sonores) entre les enregistrements d'un même groupe qui offrent un rendu cohérent de ces enregistrements par groupe.

## Revendications

1. Procédé de création d'une séquence média (130, 140) à partir de fichiers médias (122, Mⱼ), comprenant les étapes consistant à :
- obtenir (E702) une sélection de fichiers médias;
- regrouper (E704) les fichiers médias sélectionnés en une pluralité de groupes (Gᵢ) selon au moins un critère de cohérence;
**caractérisé en ce qu'**il comprend en outre les étapes consistant à :
- sélectionner (E712), pour chaque groupe (Gᵢ) de fichiers médias ainsi construit, un motif média (126) parmi une pluralité de motifs médias prédéfinis qui définissent chacun un modèle de rendu média comprenant une pluralité d'emplacements fictifs pour y indiquer des fichiers médias en vue d'un rendu média de ces fichiers médias conforme audit modèle, ledit motif média sélectionné étant apte à définir un rendu média pour l'ensemble des fichiers médias dudit groupe;
- assembler (E714, E716) les motifs médias ainsi sélectionnés et leurs fichiers médias associés de sorte à former au moins une définition (130) de la séquence média (140).

2. Procédé selon la revendication 1, dans lequel l'étape de sélection (E712) d'un motif média (126) comprend une étape de détermination (E710) d'un sous-ensemble de motifs médias qui définissent, chacun, un rendu média pour un nombre de fichiers médias qui est compatible avec le nombre (NGᵢ) de fichiers médias (122, Mⱼ) constituant ledit groupe (Gᵢ) correspondant, ledit motif média sélectionné étant alors sélectionné à l'intérieur dudit sous-ensemble déterminé.

3. Procédé selon la revendication 2, dans lequel le nombre de fichiers médias dont un motif média (126) peut définir conjointement le rendu média est variable sur une plage de valeurs (sizeMin, sizeMax) par répétition d'au moins un composant élémentaire (CE) constitutif du motif média, et ladite étape de détermination (E710) consiste à déterminer les motifs médias (126) dont la plage de valeurs associée inclut le nombre (NGᵢ) de fichiers médias (122, Mⱼ) dudit groupe (Gᵢ).

4. Procédé selon la revendication 2 ou 3, dans lequel la sélection (E712) du motif média à l'intérieur dudit sous-ensemble déterminé est fonction d'une valeur aléatoire (λ) et d'une pondération *(poids1-X)* associée à chaque motif média (126) dudit sous-ensemble.

5. Procédé selon l'une des revendications précédentes, dans lequel l'étape de regroupement (E704) comprend les étapes consistant à parcourir les fichiers médias (122, Mⱼ) dans un ordre chronologique et à regrouper les fichiers médias selon deux critères temporels combinés: une distance temporelle (δt) par rapport au fichier média le plus ancien (M_{Gi}) dans le groupe et une distance temporelle (δt) par rapport au dernier fichier média (Mⱼ₋₁) inséré dans le groupe.

6. Procédé selon la revendication 5, dans lequel le regroupement (E704) des fichiers médias (122, Mⱼ) est réalisé en tenant compte d'un critère de similitude (NCtag) entre des données de description associées aux fichiers médias du groupe (Gᵢ), pris deux à deux.

7. Procédé selon l'une des revendications précédentes, dans lequel l'étape de regroupement comprend une étape de formation (E704) de groupes (Gᵢ) de fichiers médias selon ledit au moins un critère de cohérence et une étape de fusion (E706) de groupes adjacents ainsi formés qui comprennent chacun moins de fichiers médias qu'une valeur seuil de fusion prédéfinie.

8. Procédé selon l'une des revendications précédentes, dans lequel l'étape de regroupement comprend une étape de formation (E704) de groupes (Gᵢ) de fichiers médias selon ledit au moins un critère de cohérence et une étape de subdivision (E706) d'un groupe ainsi formé en fonction du nombre de fichiers médias (122, Mⱼ) qui constituent ledit groupe et d'une valeur seuil de subdivision prédéfinie, de sorte à obtenir une pluralité de groupes subdivisés constitués d'un nombre de fichiers médias inférieur à ladite valeur seuil de subdivision prédéfinie.

9. Procédé selon l'une des revendications précédentes, dans lequel un motif média (126) comprend au moins un composant élémentaire (CE) destiné à recevoir l'identification (URL) d'un fichier média (122, Mⱼ) pour définir le rendu média de ce fichier média, et le procédé comprend une étape d'ajustement du motif média sélectionné par répétition dudit au moins un composant élémentaire de sorte à obtenir un motif média ajusté ayant un composant élémentaire pour chaque fichier média dudit groupe correspondant.

10. Procédé selon l'une des revendications précédentes, mis en oeuvre à l'aide d'une programmation orientée objet munie de classes d'objets définissant les motifs médias prédéfinis et les composants élémentaires qui les composent.

11. Dispositif de création d'une séquence média (130, 140) à partir de fichiers médias (122, Mⱼ), comprenant :
- un moyen d'obtention d'une sélection de fichiers médias;
- un module de regroupement des fichiers médias sélectionnés en une pluralité de groupes (Gᵢ) selon au moins un critère de cohérence;
**caractérisé en ce qu'**il comprend en outre :
- un moyen de sélection pour sélectionner (E712), pour chaque groupe (Gᵢ) de fichiers médias ainsi construit, un motif média (126) parmi une pluralité de motifs médias prédéfinis qui définissent chacun un modèle de rendu média comprenant une pluralité d'emplacements fictifs pour y indiquer des fichiers médias en vue d'un rendu média de ces fichiers médias conforme audit modèle, ledit motif média sélectionné étant apte à définir un rendu média pour l'ensemble des fichiers médias dudit groupe;
- un moyen pour assembler (E714, E716) les motifs médias ainsi sélectionnés et leurs fichiers médias associés de sorte à former au moins une définition (130) de la séquence média (140).

12. Produit programme d'ordinateur lisible par un microprocesseur, comprenant des instructions pour la mise en oeuvre du procédé de création conforme à l'une des revendications 1 à 10, lorsque ce programme est chargé et exécuté par le microprocesseur.
